# EUROPEAN PATENT SPECIFICATION

(11) **EP 1 920 832 B1**
(45) Date of publication and mention of the grant of the patent: **04.01.2012**
(21) Application number: 06301133.2
(22) Date of filing: 08.11.2006
(51) Int. Cl.: B01J 23/40, B01J 23/42, B01J 23/46, B01J 37/04, B01J 37/08, C01B 3/36, C01B 3/38, C01B 3/40

(54) **Process for the preparation of a supported noble metal catalyst**
Verfahren zur Herstellung einesTrägerkatalysators
Procédé de Préparation d'un catalyseur supporté à base de métaux précieux

(43) Date of publication of application: 14.05.2008
(73) Proprietor: L'AIR LIQUIDE, Société Anonyme pour l'Etude et l'Exploitation des Procédés Georges Claude, 75007 Paris (FR)
(72) Inventor: Del Gallo, Pascal, 91410 Dourdan (FR); Richet, Nicolas, 78330 Fontenay-Le-Fleury (FR); Gary, Daniel, 78180 Montigny-Le-Bretonneux (FR); Chartier, Thierry, 87220 Feytiat (FR); Delbos, Cedric, 91830 Le Coudray Montceaux (FR); Rossignol, Fabrice, c/o Université de Limoges, 47-73 avenue Albert Thomas, 87065 Limoges (FR)
(74) Representative: Conan, Philippe Claude

(56) References cited:
- EP-A- 1 464 622
- EP-A- 1 563 893
- EP-A1- 0 605 274
- JP-A- 2004 275 919
- US-A1- 2002 115 730
- US-B1- 6 228 799

## Description

The invention relates to a process for the preparation of catalysts comprising refractory and ionic conductive oxide supporting noble metal(s)

A large number of companies are currently working on the production of synthesis gas (mixture of H₂ and CO) starting from methane. Two main technologies have been deeply studied: Steam methane reforming (SMR) and catalytic partial oxidation of methane (CPO).

In the SMR technology, methane reacts with steam to produce a rich mixture of hydrogen and carbon monoxide. Two main reactions are involved:
(1) CH₄ + H₂O ⇔ CO + 3 H₂ (△H = 205.8 kJ/mol)
(2) CO + H₂O ⇔ CO₂ + H₂ (△H = -41.6 kJ/mol)

This industrial process is thus based on the methane oxidation by water, and can lead to the production of H₂ tonnage.

The reaction (1) is highly endothermic, and is promoted at high temperature, low pressure, high steam/carbon ratio (hereafter named: S/C ratio) (2 up to 4 times the stoechiometric composition) and low hourly volumetric flow rate (hereafter named: VVH) (1600 - 3000/h). The industrial reactors are working in a temperature range from 650°C to 950°C, and under high pressure from 1.5 10⁶ Pa to 4 10⁶ (15 bars to 40 bars). Temperatures equal or greater than 850°C are nevertheless required to achieve a significant conversion into CO and H₂ (e.g., H₂ yield around 70%). The reaction kinetics is improved by the use of catalysts.

Commercial catalysts are typically based on metals or metals doped with an alkali element (K), which are deposited on Magnesium or Calcium Aluminate supports, such as Ni/MgAl₂O₄ or Ni/CaAl₄O₇. Companies, such as Haldhor Topse A.S, Süd Chemie or Johnson Matthey, commercialize them.

European patent application publication EP 1 013 603 A1, discloses new based catalysts which comprise from 0.01 wt.% to 10 wt.% stabilizing elements as for example Zirconium (Zr), Yttrium (Y), Tungsten (W), Lanthanum (La) or Cerium (Ce).

International publication WO 03/106332 discloses catalysts wherein the previously mentioned supports are considered as "inorganic oxide supports". It is referred to materials composed of Alumina (Al₂O₃), Zirconia (ZrO₂), Titania (TiO₂), rare earth metal oxides or materials, which are formed from mixtures of these compounds, such as Zirconia-Cerium oxide.

The active metal is deposited using incipient wetness impregnation, which means that the impregnation of the catalyst support is carried out with a volume of metal salt solution roughly equal to the pore volume of the support material.

New catalysts have been proposed since the beginning of year 2000. They are based on a noble metal or a mixture of noble metals deposited on an inorganic oxide support, but these catalytic materials are still obtained by the impregnation method:
- International publication WO/20005/056179 A1 discloses a catalyst with a noble metal (Rh; Rh + Au) which is supported on MgAl₂O₄ + CeO₂ (+ Fe₂O₃, Cr₂O₃) doped by Li. Examples of such catalyst include the catalyst with the following composition: 2%wt. Rh / 30%wt. Ce_{0.75}Zr_{0.25}O₂ / Cordierite.
- US patent 6,884,340 B1 discloses a catalyst consisting of a noble metal (Pt) and lanthanide (Ce, Nd), which are supported on Alumina (Al₂O₃).
- US patent 6,872,300 B1 discloses catalysts consisting of a noble metal (Pt) and promoter metal (Re), which are supported on Al₂O₃-TiO₂.

A preparation of such catalysts includes first, the impregnation of the classical support (γ - Alumina or α- Alumina) by a salt (generally a nitrate precursor) containing Mg, Ce, La, ... or a mixture of them. After drying and calcination, some stabilized compounds are formed, like La₂O₃ - Al₂O₃, CeO₂ - Al₂O₃, MgO - Al₂O₃, ... These compounds can completely cover the initial support or can be present as clusters on the alumina surface. The next step then consists in the impregnation of the stabilized support by the active phase (noble metal(s) or nickel; generally as a nitrate precursors).

In the methane CPO technology, three main reactions are involved:

| | |
|---|---|
| (3) CH₄ + 1.5 O₂ ⇔ CO + 2 H₂O | (△H = -44 kJ/mol) |
| (2) CO + H₂O ⇔ CO₂ + H₂ | (△H = -41,6kJ/mol) |
| (4) CH₄ ⇔ C + 2 H₂ | (△H = 74.5kJ/mol) |

This process is highly exothermic; temperature reaches above 900°C. The H₂ / CO molar ratio, which is reached is close to 1.5 up to 2, depending on the operating conditions. A lot of bibliographic references relate to this technology:
- International publication WO/99/15483 discloses a noble metal or a mixture of noble metals (Rh, Pt, Ir, Os), which is deposited on highly refractory inorganic materials selected among compounds of elements of Groups IIa, IIIa, IVa, IIIb, IVb as well as from the Lanthanide group of the periodic table. Typical compounds are oxides, carbides, nitrides of Zirconium, Aluminum, Lanthanum and their combinations. A Zirconia - based structure is preferred.

US patent 5,720,901 discloses a CPO process of hydrocarbons using noble metal catalysts (Rh, Ru or Ir).

J.K. Hockmuth [CPO of methane....Applied Catalysis B, Environmental, 1 (1992), 89-100] reports the use of a combination of Pt & Pd supported on cordierite for methane CPO.

European patent application publication EP 1 570 904 A1, discloses a catalyst with a noble metal (Rh) supported on a Zirconia - Ceria material. The advantage of the use of Rh noble metal as the active phase for the synthesis gas production processes, is the increase of the methane conversion, a better H₂ selectivity, a better Carbon gasification rate, while allowing to process at a lower S / C molar ratio in (SMR), a lower O / C ratio in (CPO) or a lower ratio CO₂ / C in dry reforming and a higher VVH, because of the higher reactivity.

One of the main advantages in using noble metal catalysts in SMR process, is related to soot formation, because Ni, which is a common metal catalyst is considered as being responsible of the formation of Carbon. As an example, G.Q. Lu et al. (G.Q.Lu - Shaobin Wang - University of Queensland (Australia) - Chemtech (1999) - 37-43) noted that Ni/Al₂O₃ and Ni/CaO-Al₂O₃ were not suitable for CO₂ reforming of methane because they lead to the formation of Carbon and that the addition of a promoter like CeO₂ to the catalyst (5 wt.% of CeO₂ in Al₂O₃) avoids this phenomenon, thanks to its redox properties, which promote the oxidation of the carbon species that are generated at the surface of the catalyst.

The Carbon formation depends on the operating conditions, such as the choice of oxidizing agent, the methane ratio, the pressure or the temperature and of the type of catalyst namely the nature and the size of the metallic particles, the nature of the support (acidity), the morphology of the support, and the chemical interactions which are developed between the support and the active phase.

Using a noble metal, the rate of elimination of carbon along the reaction is greater than the rate of formation. But the use of noble(s) metal(s) only, deposited on classical inorganic supports is not the best solution because these active elements (Rh, Pt, Pd or a mixture of them), must be attached together with inorganic supports, which are acceptable in terms of (i) stability under hydrothermal conditions, (ii) ionic conductivity to suppress the carbon formation like Ceria and/or Zirconia and which are able to oxidize the deposited carbon species. Ceria-containing supports have been recently studied ("On the catalytic aspects of steam-methane reforming", a literature survey, P. van Beurden, 12.2004). Among them, CeO₂ - Al₂O₃, CeZrO₂ and CeZrOₓ - Al₂O₃ supports were more specifically investigated.

It was found that in the catalytic system: Ni/Ce_{0,15}Zr_{0,85}O₂, two kinds of active sites exist, one for the methane activation (on Ni) and one for steam and/or oxygen activation (on CeZrO₂ support) (Dong et al., "Methane reforming over Ni-Ce-ZrO₂ catalysts: effects of nickel content", Appl. Cata. A 226, 63-72). Because of the addition of Ceria, the ability to store, release and transfer oxygen species (O^{·}, O²⁻, OH^{·}, ...) is acquired, and results in an enhanced ability to prevent from forming Carbon, which would normally appear on the metal or on the metal-support interface. Strong interactions between NiO and the CeZrO₂ matrix were also observed.

The crystallographic structure seems to play an important role in the reactivity of the support and of the active phase. Other authors also confirm this approach (Roh et al., "carbon dioxide reforming of methane over Ni incorporated into Ce-ZrO₂ catalysts, 2004, Appl. Cata. A 276, 231-239).

Other authors pointed out the interest to use ionic conductors like refractory ceramics as support. Specific effects of the addition of Ceria (CeO₂) to Zirconia (ZrO₂) were thus demonstrated in terms of stability and resistance to coke formation. The highest stability of Pt / Ce_{0.2} Zr_{0.8} O₂, compared with the activity of Pt/ZrO₂ in methane reforming is due to the higher density of the oxygen vacancies of the support, which favors the "carbon cleaning mechanism" of the metallic particles (Noronha et al., 2003, "catalytic performances of Pt/ZrO₂ and Pt/Ce-ZrO₂ catalysts on CO₂ reforming of CH₄ coupled with steam reforming or under high pressure; Cata. Letters 90, 13-21).

As described above, the resistance of a catalyst to coke formation is due (i) to the choice of metal active phase and support, (ii) to the properties of the support (ionic conductivities, ...) but also (iii) to the size and dispersion of the metallic nanoparticles. This last point is a direct consequence of above items (i) and (ii) and of the elaboration process (from precursors to the final object).

EP-A-1 563 893 discloses an exhaust gas-purifying catalyst which includes a stabilized zirconia support and a noble metal catalyst active component, wherein 80% to 20% by weight of the total amount of the active component is supported on a surface of at least a portion of the support.

JP 2004 275919A discloses hollow particles comprising ZrO₂ mixed with CeO₂ and at least rhodium supported on the hollow particles.

EP 1 464 622 discloses an oxygen storage material comprising cerium oxide, and a second oxide of a metal which may be zirconium, and its application in a catalyst, which may comprises rhodium.

The inventors thus developed a new type of catalysts, which improves the yield of the synthesis gas production by methane reforming, without damaging their stability and having a beneficial effect on the resistance to carbon formation.

The subject matter of the present application relates to a new type of catalytic materials which are based on noble metal(s) mixed with refractory and ionic conductive oxides like Ceria (CeO₂), Zirconia (ZrO₂) or mixed (CeₓZr_{y}O_{2-δ}) or CeₓZr_{y}N_{z}O_{2-δ} wherein N is a doping element like Yttrium (Y), Erbium (Er), Magnesium (Mg), Lanthanum (La), Praseodium (Pr), and which can be used in steam methane reforming (SMR) processes, Catalytic partial oxidation (CPO) of methane processes, Ethanol steam reforming (ESR) processes, as well as in synthesis gas production processes involving the working of a ceramic membrane reactor (CMR).

That is the reason why, according to a first embodiment, the present invention relates to a process for the preparation of a catalytic composition comprising a catalytically active metal and a solid support, characterized in that a proportion of said catalytically active metal is dispersed on the outer surface of said support and another proportion is included into the core structure of said solid support, and said solid support is a refractory and preferably an ionic and/or mixed conductive oxide.

Said process comprises the following successive steps:
Step 1: Mixing a precursor of the catalytically active metal with a powder of the refractory and ionic conductive oxide in a proportion to reach a final amount of said catalytically active metal greater than its solubility limit in said refractory and ionic conductive oxide, in a solvent containing a dispersing agent, to form a suspension;
Step 2: Drying the suspension obtained at Step 1, to form a powdered mixture;
Step 3: Heating the powdered mixture obtained at Step 2, to decompose the precursor of the catalytically active metal, to obtain the catalytic composition; characterized in that the process comprises, prior to Step 1, the preparation of said powder of the refractory and ionic conductive oxide, said preparation comprising the subsequent following steps:
Step P₁: Preparation of an aqueous solution of salt(s) precursor(s) of said refractory and ionic conductive oxide;
Step P₇: Partial evaporation by heating and agitation of the water of the solution obtained at step P₁, to form a gel of the metal salt(s) precursor(s) of the refractory and ionic conductive oxide;
Step P₃: Heat drying of the gel obtained at Step P₂,
Step P₄: Grinding of the dry gel obtained at Step P₃, to form a powder of the gel of the metal salt(s) precursor(s) of the refractory and ionic conductive oxide.
Step P₅: Heating the powder obtained at step P₄ to decompose the precursors and to obtain said powder of the refractory and ionic conductive oxide, which is used at Step 1.

A particular embodiment of the above process also comprises a subsequent Step 4 of ageing the catalytic composition obtained at Step 3.

In the catalytic material as described above, one part of the catalytically active metal is included inside the structure of the support below its surface; the maximum quantity of said included catalytically active metal, mainly depends on the crystallographic structure of the support, of the metal atom size and of the electronic interactions. The other part of the catalytically active metal, which is a proportion in excess, which cannot be included inside the sub-surface structure of the support, is grafted as metal particles or as metal oxide particles on the sub-surface of said support.

As an example of inclusion of metal in a support, reference can be made to the "solid solutions" or to other forms of intimate mixtures. For a solid solution, the maximum quantity of catalytically active metal is the solubility limit of the metal in the solid, which is generally between 5% molar to 10% molar; it means for example, that a solid solution of 1 % molar Rhodium in Ceria contains 1 Rh atom per 100 CeO₂ moles. In such intimate mixtures, the included catalytically active metal cannot be considered as being separated from the support, since both materials are intimately mixed before the use in operating conditions. As other intimate mixtures, which are not a solid solution, are the new crystalline structures incorporating both the metal atoms and the atoms constituting the oxide. According to the first embodiment of the invention, the catalytically active phase of the catalytic composition consists both, in the intimate mixtures of the catalytically active metal with the support and the excess of the catalytically active metal, which is grafted on the surface of the support.

The catalytic composition as defined above, is a saturated solid solution, or other forms of intimate mixtures, of said catalytically active metal in said solid support, together with a dispersion of nanoparticles of said catalytically active metal which are grafted on the outer surface of said solid solution.

By nanoparticles, it is understood that the average size of the particle is less or equal to 10⁻⁷ m.

According to another particular embodiment of the invention, in the catalytic composition as defined above, the catalytically active metal is selected from Ruthenium (Ru), Rhodium (Rh), Palladium (Pd), Rhenium (Re), Osmium (Os), Iridium (Ir) Platinum (Pt) or combinations thereof

According to another particular embodiment of the invention, in the catalytic composition as defmed above, the catalytically active metal is Rhodium or a combination of Rhodium with Platinum.

According to another particular embodiment of the invention, in the catalytic composition as defined above, the refractory and ionic conductive oxide is selected from Ceria (CeO₂), Zirconia (ZrO₂), mixed oxides of the formula (I):

Ce₍₁₋ₓ₎ Zrₓ O_{(2-δ)} (I),

wherein 0 < x < 1 and δ ensures the electrical neutrality of the oxide, or doped mixed oxides of the formula (II):

Ce_{(1-x-y)} Zrₓ D_{y} O_{2-δ} (II),

wherein D is selected from Magnesium (Mg), Yttrium (Y), Strontium (Sr), Lanthanum (La), Praseodium (Pr), Samarium (Sm), Gadolinium (Gd), Erbium (Er) or Ytterbium (Yb); wherein 0 < x < 1, 0< y <0,5 and δ ensures the electrical neutrality of the oxide.

As a more specific embodiment, which must not be regarded as a limitation of the present invention, in the catalytic composition as defined above, the catalytically active metal is Rhodium (Rh), and the refractory and ionic conductive oxide is selected from Ceria (CeO₂) or from the mixed oxide of the formula (I'):

Ce_{(1-x')} Zr_{x'} O_{(2-δ)} (I'),

wherein 0 < x' ≤ 0.5 and δ ensures the electrical neutrality of the oxide.

As another more specific embodiment, the catalytic composition as defined above, contains from 5.0 wt % to 15 wt. % of catalytically active metal per 100 wt % of refractory and ionic conductive oxide.

In the above defined processes and its particular embodiments, the elemental operations such as powders mixing, suspension making, suspension heat drying, powder grinding, powder heating, calcination, attrition milling, are implemented in an usual way for the man skill in the art of ceramics manufacturing.

The composition prepared by the hereinabove defined process may be used as a catalyst in hydrocarbons Steam Reforming, hydrocarbons catalytic partial oxidation or hydrocarbons dry reforming and more particularly, the use of a catalytic composition, as defined above, wherein hydrocarbons is natural gas, methane, ethane, propane, butane or mixtures thereof.

The following considerations tend to propose some mechanisms of action of the catalytic composition, however they must not be regarded as limiting the scope of the invention.
- Before the use of the catalytic composition according to the invention in operating conditions, catalytically active metal particles, such as Rhodium or Platinum particles, metal oxide particles, such as Rh₂O₃, PtO, or PtO₂, particles are observed on the surface of the support provided that:
- The catalytically active metal weight proportion in the catalytic composition is above its solubility limit in the support material,
- The temperature and duration of the calcination step is high enough to form the solid solution or other forms of intimate mixtures + formation of the noble metal(s) oxide(s) grafted on the surface of the solid solution or other forms of intimate mixtures, this process is partially reversible. After catalytic reaction (reductive operation) + oxidative treatment the noble metal(s) present in the solid solution is re inserted in the support material. This is not the case for the free metal in excess after thermal treatment.
- During the reaction under reducing atmosphere in operating conditions (SMR, CPO...), an "*ex-situ*" growth of the metal from the inner part of the support towards its surface, can occur leading to the appearing of isolated metallic clusters (typically below 1 to 100 nanometers in size, preferably between 1 to 50 nm). The presence of these clusters is demonstrated by Field emission scanning electron microscopy (hereafter named: FESEM), by Transmission Electron Microscopy (hereafter named: TEM) and chemisorption analyses. The appearing of the clusters, as well as their number and size, depend on the operating conditions (temperature, pressure, atmosphere...), as well as on the quantity of metal initially present in the solid solution or other forms of intimate mixtures. This operation is reversible. After operation (SMR conditions for example) and an oxidative treatment (air/1000°C) the catalytic material seems to be the same as after synthesis and initial thermal treatment (before reaction). During the same operation *the free metal (and*/*or oxide) due to the initial excess of metallic phase is present as metallic particle and is grafted to the support sub-surface.* These particles can be observed after thermal treatment, the size directly depend of:
- the amount of noble metal(s) deposited (from 20 nm to a complete covering of the support).and the solubility limit (solid solution or other forms) between the metallic phase and the support (refractory + ionic conductor),
- the use of a specific elaboration process (from the precursors to the final product),
- the formation of the active phase under operating conditions.
- the active phase is in this case (above the solubility limit of the metal(s) in the support) the solid solution (or other forms) + free metallic particles due to the excess of noble element(s) grafted on the sub-surface structure of the support.

In summary, the catalysts consist of nanosized noble metal(s) clusters extracted out of a solid solution or other forms of intimate mixtures with the support + nanoparticles of the excess of free noble metal(s) grafted on the surface structure of the support. The remaining solid solution (or other forms of mixtures) may also take part to the catalytic activity. The extracted noble metal clusters, extracted or due to the excess, (Rh, Pt, ...) act as active sites (which accelerate the establishment of a chemical equilibrium without themselves being consumed), whereas the support acts as an anchor for these clusters, thus preventing from coalescence effects in operating conditions. This support can be itself a nanosized powder with a high specific surface area to improve the effectiveness of the catalytic material, which is directly linked to the noble metal surface area *(i.e.* the number of active sites). The higher the active surface area of the catalyst is, the greater the number of molecules produced per time unit is. The reactions occuring in an heterogeneous phase, the nature of the noble metal (Pt, Rh, ...), the initial size, the spatial distribution and the presence of preferential crystalline planes are key parameters that mainly depend on the elaboration process. The catalyst stability results of the physico-chemical properties of the metals used (chemical reactivity, melting point ...) and on the interactions with the support oxide. This support oxide must have (i) refractory properties (to prevent from grain coarsening due to sintering effects under hydrothermal conditions and/or CPO conditions, (ii) ionic conductivity (to prevent from coke formation), and (iii) strong interactions with the noble metal(s) (a minimum solubility of the noble metal(s) in the crystallographic structure of the oxide support must exist).

The support oxide has hence a strong influence on the steam reforming reaction. It not only determines the distribution of the metal clusters exhibiting a catalytic activity, but also limits the coalescence phenomenon of active sites in operating conditions, depending on how strong the cluster anchorage is, as mentioned hereabove. In addition, the support must be thermally stable under operating conditions to keep its initial high specific surface area (resistance to sintering and as a consequence to the encapsulation of the active sites). Finally, the support also affects the reactivity and resistance to coke formation and may even participates in the catalytic reaction itself. The advantage of oxide presenting oxygen transport properties is to provide an extra source of oxygen that prevents the accumulation of carbon on the catalyst.

The catalyst final microstructure control (noble metal incorporated in the ceramic support + free noble metal nanoparticule grafted on the surface structure of the support) is a key point for the stability and the activity in operating conditions. Consequently, the catalyst elaboration process must be perfectly reliable with regards to the nanostructure it conducts to.

Soft chemical routes can be followed to adapt the elaboration process. These routes may result of different approaches:
- the use of liquid precursors only (Sol-gel techniques, Co-precipitation...)
- the use of both solid and liquid precursors. For instance, the noble metal(s) can be introduced through liquid precursor(s) and the support can be in the form of a nanopowder of refractory and ionic conductive oxide,
- the use of both liquid and gas (spray pyrolysis for example).

In all cases, after the thermal treatment, the objectives are (i) to obtain the solid solution (or other forms of intimate mixtures) with presence after synthesis of free metallic element(s) or free oxide(s) on the surface of the support, (ii) to obtain a small support nanopowder (typically less than 200 nm in diameter and preferably around 20 nm but in all cases with a high resistance to sintering). After reaction in operating conditions, the nanostructure of the catalytic material is characterized by a mixture of (i) some metallic particles extracted out of the solid solution (or other forms of intimate mixtures) and well dispersed onto the support surface, (ii) a solid solution with a lower amount of metal which may evidence a catalytic activity, (iii) presence of "large" nanoparticles of free noble metal (big means more than 10 nm after thermal treatment, before operating conditions.
by using a processing route based on liquid precursors only.

After thermal treatment, the elements are present in the general formulae MᵤCeₓZr_{y}N_{z}O_{2-δ} + free noble metal(s) oxide(s). The quantity of noble metal(s) introduced should be above the solubility limit of M in the support oxide (the intimate mixture of M with the support can be in another form than that of a solid solution).

After the reaction in operating conditions, the nanostructure of the catalytic material is characterized by a mixture of:
(i) Metallic clusters extracted out of the solid solution (or others forms of intimate mixtures) onto the MᵤCeₓZr_{y}O_{2-δ} support surface;
(ii) A solid solution with a lower amount of metal, which may show evidence of a catalytic activity.
(iii) Metallic nanoparticules present and grafted on the surface structure of MᵤCeₓZr_{y}O_{2-δ} after the elaboration process. This presence is due to the excess of the noble metal(s) (quantity introduced above the solubility limit),

The nanosized claimed catalytic composition may have the following specific features:
- A specific area determined by BET, a S_{BET} between 2 and 200 m².g⁻¹
- A micro-pore volume between 0.0001 and 0.0002 cm³.g⁻¹
- A mesopore size distribution between 50 and 100 nm
- A monomodal distribution of the elementary nanometric support particles
- A free M° apparent crystal size (extracted out of MᵤCeₓZr_{y}O_{2-δ}) = < 50 nm, preferably < 10 nm
- A characteristic XRD pattern showing only the crystal phases of the support material and of the excess noble metal(s) after the elaboration process
- A characteristic peak of reducibility of the catalyst obtained under reducing atmosphere at high temperature 850-900°C (TPR-TPO characterizations) of said solid support, without forming a continuous layer coating overall outer surface.

This novel claimed catalytic composition can be used in a large range of operating conditions: from 1 up to 40 atm., from 650 up to 1200°C with high space velocities (3000 - 360000/h). The SMR and CPO thermodynamic conditions for the specific case of RhᵤCeₓO_{2-δ} + extracted Rh° + free Rh° are very close or equal to the equilibrium.

The claimed catalytic composition may be deposited on various substrates such as ceramics (cordierite....) or metal alloys (FeCrAlY...). In addition, it can easily be shaped into balls, pellets, and monoliths... as a function of the targeted industrial applications.

In order to illustrate this approach, examples are described hereafter.

### Example 1a: Elaboration of a Ce_{0.75}Zr_{0.25}O_{2-δ} support nanopowder by liquid route

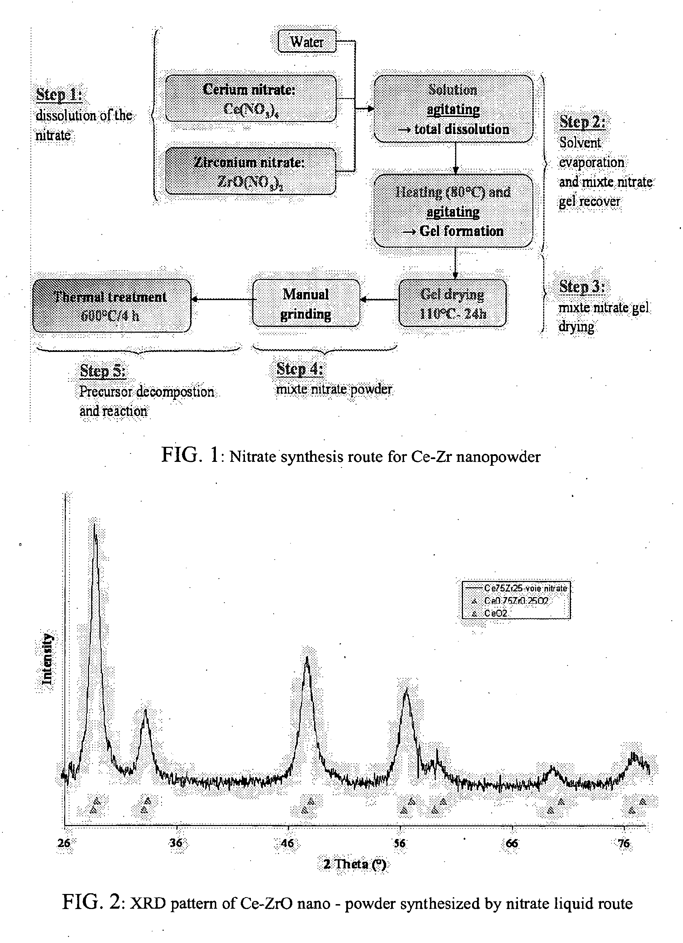

Figure 1 is a diagrammatic representation of a chemical route, which involves nitrate salts as precursors, to obtain the refractory and ionic conductor oxide Ce_{0.75}Zr_{0.25}O_{2-δ} support nano-powder. Other routes may be used, like the sol-gel technique, or the co-precipitation.

The powder resulting from Step 3 of Figure 1 is made of non-cohesive large blocks with a very porous morphology (BET surface area ≈ 45 m².g⁻¹,means the Brunauer,Emmett,Teller method for determining surface area by N₂ adsorption), these blocks resulting from the agglomeration of 30 nm elementary nanoparticles. Before the Rhodium deposition and the thermal treatment to form the solid solution RhᵤCe_{0,75-α} Zr_{0,25-β}O_{2-δ}, the powder grain size distribution must be adapted by several steps of deagglomeration such as high energy attrition milling or ultrasonic treatments.

Figure 2 is the X ray diffraction pattern of the Ce_{0.75}Zr_{0.25}O_{2-δ} nano - powder synthesized by the nitrate route represented by Figure 1. It shows large peaks, likely due to a small crystallite size and/or to a small variation of the material chemical composition.

### Example 1b: Rhodium deposition on CeO₂

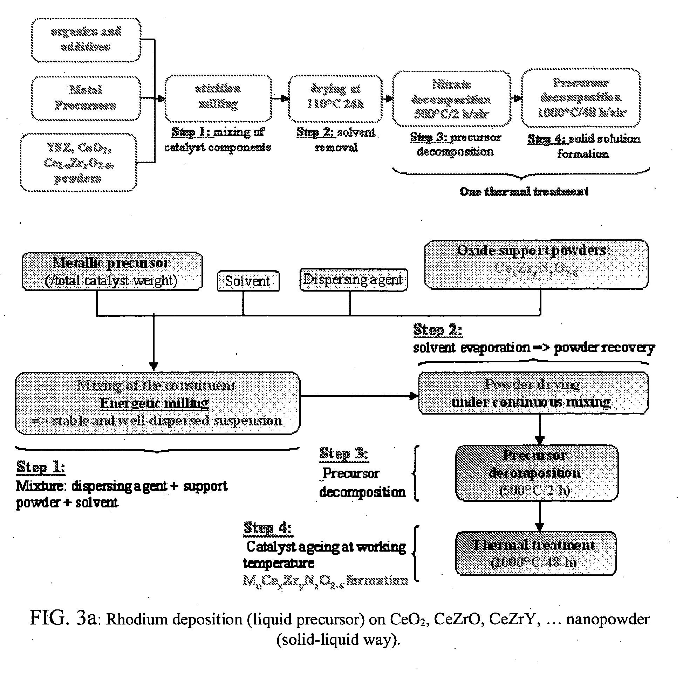

The different steps of an example of a processing route to deposit Rh on CeO₂ are presented on Figure 3a. It is completely different from the conventional and traditional impregnation methods (successive wetness impregnation). The advantage of this route is to provide a homogeneous and reliable distribution of metal(s) precursor(s) on the support surface before the formation of the RhᵤCeO_{2-δ} solid solution by thermal treatment + free Rh₂O₃ in some case (Rh excess: 15wt%/CeO₂ for example). Several RhᵤCeO_{2-δ} solid solutions (or other forms of intimate mixtures) + free Rh₂O₃ in excess corresponding to Rh contents in the range from 0.1 to 15 wt.% were prepared following the route described in Figure 3a. These samples were characterized by XRD, porosimetry, FESEM: Fiel Emission Scanning Electronic Microscope).

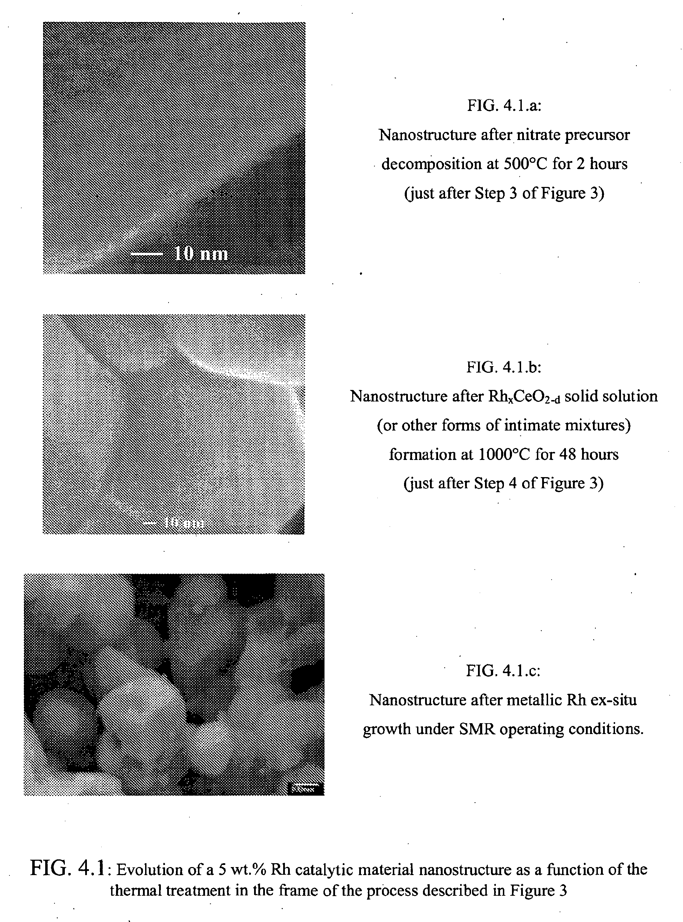

Figure 4.1: The FESEM observations of Figure 4.1, show the evolution of a 5 wt.% Rh catalytic material nanostructure in the course of the thermal treatment in the frame of the process described in Figure 3a (in the case of a Rh proportion value in the catalytic composition, which is above the limit of the solubility value in CeO₂).

Figure 4.1. a is a FESEM observation of the nanostructure after nitrate precursor decomposition at 500°C for 2 hours (just after Step 3 of Figure 3a). Well-dispersed and nanometric isolated islands of Rh₂O₃ (<10 nm) are observed on the CeO₂ support.

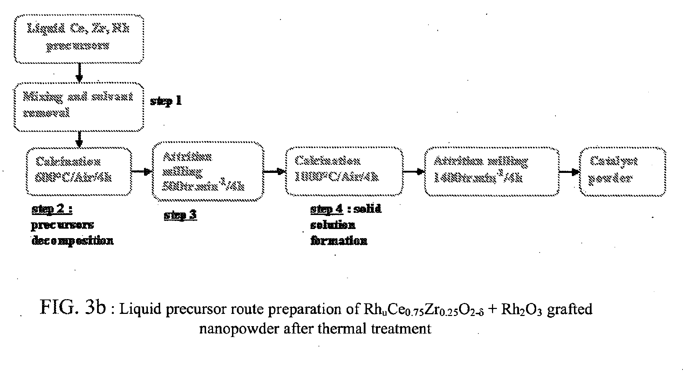

Figure 4.1.b is a FESEM observation of the nanostructure after RhₓCeO_{2-d} solid solution (or other forms of intimate mixtures) formation at 1000°C for 48 hours (just after Step 4 of Figure 3). No Rh₂O₃ islands are observed on the Ceria surface anymore (the support surface is completely smooth) because of the formation of the RhₓCeO_{2-d} solid solution (or other forms of intimate mixtures).

Figure 4.1.c is a FESEM observation of the nanostructure after metallic Rh "ex-*situ* growth" under SMR operating conditions (900°C, 20bars, S/C=1,5, τ=4s τ is the contact time of the gas crossing the catalytically load). Nanosized Rh clusters (<50nm) are extracted out of the solid solution (or other forms of intimate mixtures). A good anchorage of Rh clusters is observed likely due to an epitaxial growth. The remaining solid solution (or other forms of mixtures) may also take part to the catalytic activity.

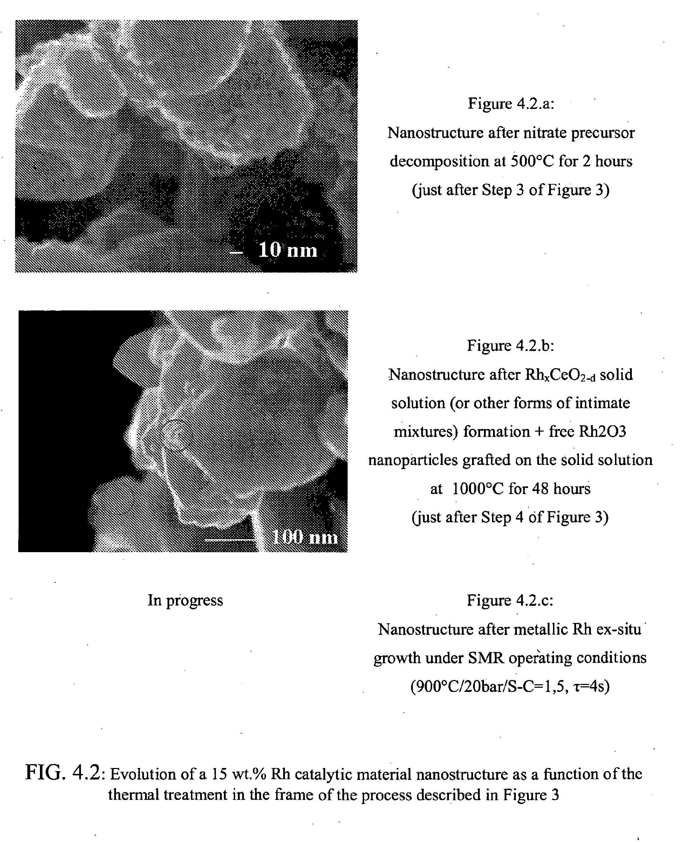

Figure 4.2: The FESEM observations of Figure 4.2, allows to observe the evolution of 15 wt.% Rh catalytic material nanostructure in the course of the thermal treatment in the frame of the process described in Figure 3a (in the case of a Rh proportion value in the catalytic composition which is above the limit of the solubility value in CeO₂). In this case after thermal treatment the presence of free Rh₂O₃ is clearly identified.

Figure 4.2.a: is a FESEM observation of the nanostructure after nitrates precursors decomposition at 500°C for 2 hours (just after Step3 of Figure 3a). Nanometric isolated islands of Rh₂O₃ (<50nm) are observed on the CeO₂ support - probably one part of the rhodium oxide has recovered the ceria nanoparticle. The excess appears as nanoparticles or large zones.

Figure 4.2.b: is a FESEM observation of the nanostructure just after Step 4 of Figure 3a, at 1000°C for 48 hours. RhᵤCeO_{2-δ} solid solution (or other forms of intimate mixtures) is formed and free Rh₂O₃ nanoparticles (the excess of Rh) are grafted on the solid solution (named hereafter: RhᵤCeO_{2-δ} + grafted Rh₂O₃).

Figure 4.2.c: is a FESEM observation of the nanostructure after SMR conditions

### Example 1c: One-step elaboration of RhᵤCe_{0.75}Zr_{0.25}O_{2-δ}

Figure 3b is a diagrammatic representation of a chemical route, which involves only liquid precursors as Rh Ce and Zr nitrates salts to elaborate RhᵤCe_{0.75}Zr_{0.25}O_{2-δ}. This route provides a homogeneous and reliable distribution of all the elements before the formation of the RhᵤCeO_{2-δ} solid solution + free noble oxide(s) by thermal treatment.

### Example 2a: Catalytic composition test under SMR and CPO experimental conditions

The catalytic activity of catalyst compositions of the type:

**RhᵤCeO_{2-δ} + grafted Rh₂O₃**

with several amounts of Rh were tested under SMR and CPO conditions.

In the past, several authors have studied the solubility of Rh in YSZ and ZrO₂ cristallographic structures (Ruckenstein et al., "Effect of support on partial oxidation of methane to synthesis gas over Rhodium catalyst", 1999 Journal of Catalysis 187, 151-159; Y-C. Zhang, et al., "Stabilization of cubic ZrO2 with Rh(III) and/or La(III"). 1988 Journal of Solid State Chemistry 72, 131-136; E. Ruckenstein, H. Y. Wang, "Temperature-Programmed Reduction and XRD Studies of the Interactions in Supported Rhodium Catalysts and Their Effect on Partial Oxidation of Methane to Synthesis Gas". 2000 Journal of Catalysis 190, 32-38). They concluded that the solubility limit of Rh in Zr0₂ is 8%mol thus the solid solution has the following chemical composition : Rh_{0.08}Zr_{0.92}O_{1.96}. Above 8%mol, the excess of Rhodium, which does not go into solid solution (or other forms of mixtures) in the support material, stands as "free" rhodium-based islands on the support surface.

In the present experiment, catalyst compositions with several values of Rh amount were tested (0.1 %wt Rh, 1%wt Rh, 5%wt Rh, 15 %wt Rh).

### 1. Characterization of the samples

The B.E.T. surface areas of RhᵤCeₓO_{2-δ} (with or without "free" excess Rh) were measured using a SORPTY^{™} 1750 instrument.

The metal dispersion, surface area and crystal size are determined using a CHEMISORB^{™} 2750 instrument according to the H₂ chemisorption method.

The results are recorded in Table 1.

**Table 1: B.E.T. Surface Area and results of the chemisorption analyses on the solid-solution (or other forms of intimate mixtures) samples (initial phase: RhᵤCeₓO_{2-δ} + Rh₂O₃ for Rh 15 wt%)**

| | B.E.T. Surface Area | Rh dispersion state | Metallic surface area | Apparent crystallite size |
|---|---|---|---|---|
| | m²/g | % | m²/g of metal | nm |
| 15%Rh/CeO₂ | 2 | 1.84 | 8.1 | 60 |
| 5wt.%Rh/CeO₂ | 2.78 | 4.23 | 18.6 | 26 |
| 1wt.%Rh/CeO₂ | 3.97 | 9.67 | 42.5 | 11 |
| 0.1wt.%Rh/CeO₂ | 3.82 | | | 0.7 |

As expected (see Table 1), the crystal size increases together with the Rh loading, whereas the surface area and the dispersion state of metallic clusters is decreasing.

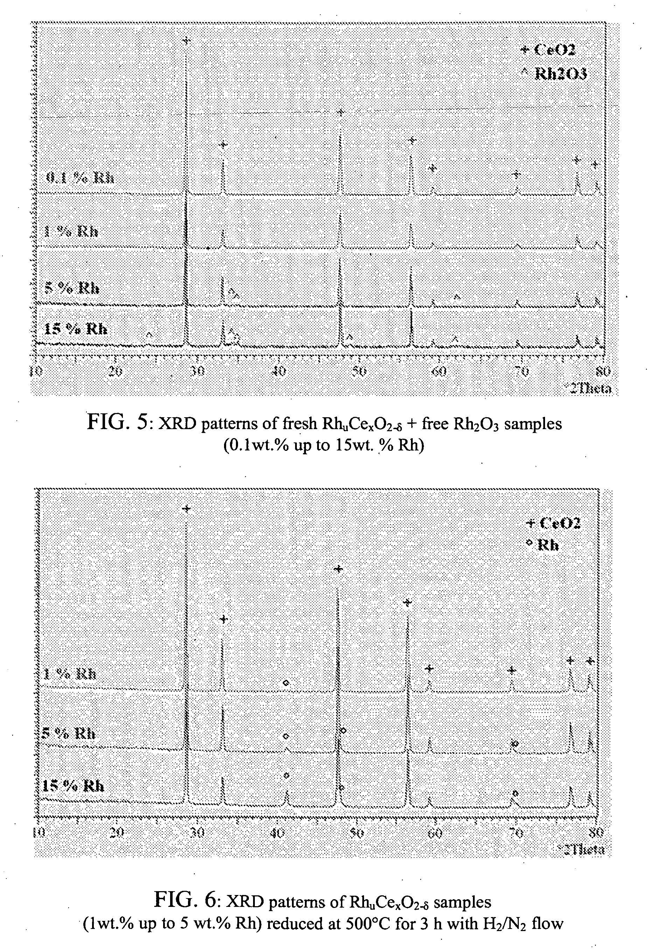

Figure 5 is the XRD patterns of RhᵤCeₓO_{2-δ} fresh samples, produced by the process described in Figure 3 and exhibiting Rhodium weight fractions from 0.1 to 15%. They show diffraction peaks corresponding to the support phase (CeO₂) and to the β-Rh₂O₃ phase at 5 and more at 15 wt.% of Rh. For the lower amounts of Rh, the intensity of the β-Rh₂O₃ peaks is too low to be detected. Anyhow, it could be interesting to work with the highest amounts of Rh as possible but just below the solubility limit:
(i) to improve the homogeneity of the catalytic material, as well as
(ii) to have two types of actives sites: Rh extracted from RhᵤCeO_{2-δ} combined with free Rh₂O₃ grafted on the sub-surface structure of the solid solution.

Figure 6 is the XRD patterns of reduced samples, which were reduced under operating conditions at 500°C for 3 h with H₂/N₂ flow. Some diffraction peaks corresponding to Rh⁰ are observed instead of those corresponding to β-Rh₂O₃. The Rh⁰ peak intensity decreases together with the Rh amount.

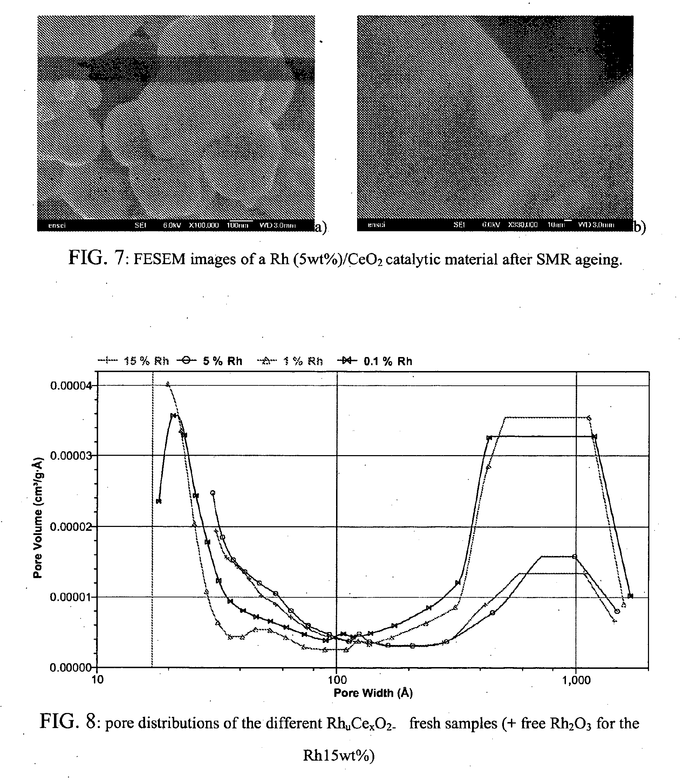

FESEM images (Figures 7a and 7b) of samples containing 5wt.% of Rh show evidence, after an SMR ageing of 40 hours, of free Rh clusters (size between 5 nm and 50 nm) are clearly detected on RhᵤCeₓO_{2-δ} nanoparticle support at the Ceria surface, which is in accordance with XRD results. These clusters were extracted out of the initial RhᵤCeₓO_{2-δ} solid solution by an *"ex-situ"* growth process. The catalytic activity is due to these free Rh clusters, but also likely to the remaining RhₓCeₓO_{2-δ} solid solution (or others forms of intimate mixtures). As observed in the case of Rh (15 wt%) after thermal treatment, the presence of a free rhodium oxide excess is detected. After reaction, for example under SMR operating conditions, the same microstructure with larger Rh particles is observed. The main risk with an excess of Rh would be a complete covering of the Ceria nanoparticle (size: 100nm) which would induce bad catalytic activity and stability.

Figure 8 represents the pore size distributions measured using the BET technique for the different Rh concentrations of the RhᵤCeₓO_{2-δ} fresh samples. Pore size distribution is very similar whatever the samples. It seems essentially controlled by the initial CeO₂ support nanopowder grain size distribution, which remains the same in all cases. However, the volume of the large pores around 100 nm is reduced for the highest amounts of Rh.

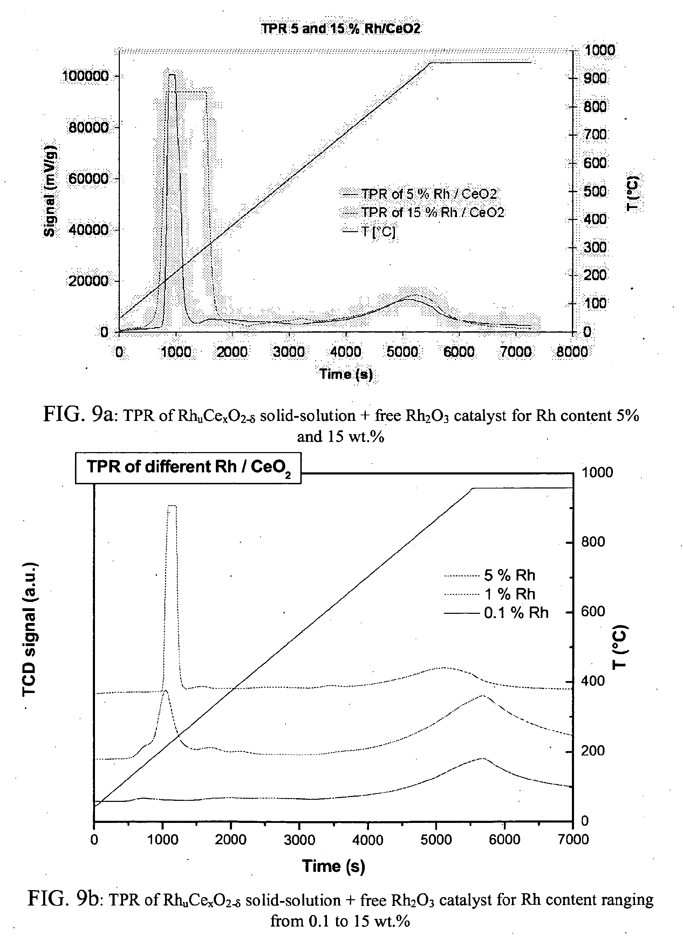

The sample reducibility was determined by TPR analysis. The TPR patterns of Figure 9a and 9b point out that Rh reduction (Rh₂O₃ → Rh⁰) occurs between 200 and 250°C, while the peaks at 900°C can be attributed to the partial reduction of surface Ce⁴⁺ → Ce³⁺ or/and to the interaction between the support and the noble metal corresponding to the formation of a solid-solution RhᵤCeₓO_{2-δ} (or others forms of intimate mixtures). In both figures 9a and 9b, the width of the peak corresponding to the reduction of Rh depends on the content of Rh, on the size of Rh particles and on the interaction between the support and the noble metal. That explains why the width of the first peak is greater for high amounts of Rh.

In our system, the surface sites are nanometric. At high temperature and under reducing atmosphere and depending on the saturation, a part of the nanometric entities initially located at the surface of the nanoparticles of Ceria leave this surface, towards the inner part of the support leading to the formation of a solid solution of which is comparable to an alloy. To be active, this system further requires a reduction step, which is carried out at high temperature(> 800°C), in order to conduct to the *"ex-situ"* growth of metal Rh sites at the Ceria surface upon the solid solution. The performances of this new material were evaluated for SMR &CPO processes.

With a large excess of Rh (more than 5 wt%), the presence of free Rhodium is confirmed by TPR-TPO. As observed for lower quantities (1 wt% and 5 wt%) some free Rh₂O₃ was detected by TPR-TPO, but not by FESEM and XRD. No free rhodium oxide was detected by TPR-TPO for 0,1 wt%.

### 2. Methane Catalytic partial oxydation (CPO) with the inventive catalytic composition

The evaluation in the partial oxidation of CH₄ (CPO) of the activity of samples with different Rh wt.% was carried out under various mixtures of CH₄/O₂/He (v/v/v representing volume flow ratios), either with or without a pre-reducing step (500°C for 3 h with H₂/N₂ flow) of the catalytic composition. Tests were carried out on the non-reduced and on after-reduced 15wt.% Rh/CeO₂ catalytic composition (Tables 2 and 3).

**Table 2: CPO tests on 15 % Rh/CeO₂ (carried out without pre-reduction step).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| Temperature of the furnace | °C | 500 | 750 | 750 | 750 | 750 | 500 |
| Contact Time | ms | 63 | 63 | 62 | 102 | 52 | 63 |
| Temperature at the exit of the catalyst | °C | 621 | 748 | 716 | 711 | 729 | 600 |
| Maximum temperature in the furnace (hotter zone) | °C | 621 | 810 | 754 | 755 | 770 | 600 |
| Convertion of CH₄ | % | **54.3** | 83.2 | 61.3 | 60.1 | 53.7 | **49.6** |
| Selectivity CO | % | 59.5 | 94.5 | 75.4 | 75.6 | 68.5 | 53.3 |
| Yield H₂ | % | 79.5 | 93.3 | 80.2 | 81.0 | 75.8 | 75.7 |
| Selectivity CO₂ | % | **40.5** | 5.5 | 24.6 | 24.4 | 31.5 | **46.7** |

Sel CO=100xCOout/(COout+CO₂out)
Sel CO₂=100xCO₂out/(COout+CO₂out)
Yield H₂=100XH₂out/(3x(COout+CO₂out)+ CO₂out)

**Table 3: Results of the CPO tests on 15 % Rh/CeO₂ (after reduction for 3 h at 500°C).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| T oven | °C | 500 | 750 | 750 | 750 | 750 | 500 |
| C T | ms | 63 | 63 | 62 | 102 | 52 | 63 |
| Tout | °C | 591 | 729 | 681 | 676 | 685 | 597 |
| Tmax | °C | 613 | 781 | 749 | 750 | 760 | 615 |
| Conv. CH₄ | % | **51.0** | 85.8 | 63.5 | 60.8 | 58.2 | **51.4** |
| Sel. CO | % | 53.5 | 96.0 | 77.8 | 76.1 | 73.7 | 54.9 |
| yield H₂ | % | 77.4 | 93.1 | 82.2 | 82.3 | 79.4 | 76.4 |
| Sel. CO₂ | % | **46.5** | 4.0 | 22.2 | 23.9 | 26.3 | **45.1** |

The 15% Rh/CeO₂, is active in all the reaction conditions. In particular at 500°C and diluted mixture, high CH₄ conversions were observed, both for the tests carried out with (pre-reduced) and without (not reduced) the reduction step at 500°C. Repeating this test as final test (after higher temperature and higher concentration of the feed) the catalytic activity is approximately the same than that of the initial test. This is probably due to the over-sizing of the amount of Rh, which cannot discriminate the part of the activity due to free Rh and to the solid-solution Ce³⁺ Rh. The CO₂ selectivity seems to be high and don't decrease with time on stream.

New tests were carried out on 5wt.% Rh/CeO₂ catalyst with and without the reduction step at 500°C (Tables 4 and 5).

**Table 4: Results of the CPO tests on 5 wt.% Rh/CeO₂ (carried out without pre-reduction step).**

| CH₄/O₂/He | v/v/v | 2/1/20 Initial test | 2/1/20 | 2/1/4 | 2/1/1 | 4/2/2 | 2/1/20 | 2/1/20 Final test |
|---|---|---|---|---|---|---|---|---|
| T oven | °C | 500 | 750 | 750 | 750 | 750 | 750 | 500 |
| CT | ms | 63 | 63 | 62 | 102 | 52 | 63 | 63 |
| T out | °C | 605 | 777 | 810 | 735 | 852 | 748 | 590 |
| T max | °C | 605 | 791 | 879 | 930 | 907 | 780 | 599 |
| Conv.CH₄ | % | **36.0** | 61.4 | 73.8 | 67.3 | 80.1 | 84.9 | **46.2** |
| Sel. CO | % | 30.6 | 83.5 | 95.2 | 88.7 | 97.6 | 96.4 | 52.1 |
| Yield H₂ | % | 44.5 | 78.6 | 85.0 | 82.7 | 87.1 | 92.7 | 66.2 |
| Sel. CO₂ | % | **69.4** | 16.5 | 4.8 | 11.3 | 2.4 | 3.6 | **47.9** |

**Table 5: Results of the CPO tests on 5 wt.% Rh/CeO₂ (pre-reduction for 3 h at 500°C).**

| CH₄/O₂/He | v/v/v | 2/1/20 Initial test | 2/1/20 | 2/1/4 | 2/1/1 | 4/2/2 | 2/1/20 | 2/1/20 Final test |
|---|---|---|---|---|---|---|---|---|
| Toven | °C | 500 | 750 | 750 | 750 | 750 | 750 | 500 |
| CT | ms | 63 | 63 | 62 | 102 | 52 | 63 | 63 |
| Tout | °C | 552 | 752 | 808 | 751 | 788 | 750 | 546 |
| Tmax | °C | 629 | 808 | 826 | 957 | 928 | 790 | 614 |
| Conv. CH₄ | % | **43.1** | 76.7 | 84.0 | 78.3 | 88.7 | 93.4 | 53.2 |
| Sel. CO | % | 37.8 | 92.2 | 96.8 | 93.3 | 99.2 | 98.9 | 57.8 |
| Yield. H₂ | % | 63.7 | 89.7 | 91.9 | 89.2 | 92.8 | 96.7 | 78.1 |
| Sel. CO₂ | % | **62.2** | 7.8 | 3.2 | 6.7 | 0.8 | 1.1 | **42.2** |

The pre-reduced 5wt.% Rh/CeO₂ sample shows evidence of higher performances than the non-reduced sample in all the reaction conditions. In addition, the CH₄ conversion increases, whereas the CO₂ selectivity decreases with time on stream due to the on-going reduction of samples in operating conditions (more & more reducing and hotter stream). This explains also why the pre-reduced catalyst is always more efficient than the non-reduced one at the beginning of the tests.

The benefits in term of performances of these systems are due:
(i) to the Rh clusters extracted out of the RhᵤCeₓO_{2- δ} solid solution (or other forms of intimate mixtures) and likely,
(ii) to the contribution of the remaining RhᵤCeₓO_{2-δ} solid-solution (or other forms of mixtures).

The most important difference between the 5 and 15 wt% Rh, concerns the initial methane conversion. At 500°C as observed in Tables 3 and 5 or in Tables 2 and 4 (cases of the non reduced samples) the catalytic activity of the 15 wt% Rh is higher than the 5 wt % Rh (54,3 % versus 36%, 51 % versus 43,1%). This means that at 500°C with or without pre reduction treatment of the sample, the catalytic activity is probably due to the free Rhodium. During time on stream, the increase of oven temperature (750°C) promotes the reduction of RhᵤCeₓO_{2-δ} and increases the catalytic activity. After return to initial conditions (500°C, 2/1/20), the methane conversion and the CO selectivity are higher than before particularly for the 5 wt% Rh catalytic composition.
Tables 6 and 7 record the catalytic activity in CPO conditions of 0.1 wt% and 1 wt%Rh.

**Table 6: Results of the CPO tests on 1 % Rh/CeO₂ (after reduction for 3 h at 500°C).**

| CH₄/O₂/He | v/v | 2/1/20 Initial test | 2/1/20 |
|---|---|---|---|
| Toven | °C | 500 | 750 |
| CT | ms | 63 | 63 |
| Tout | °C | 573 | 764 |
| Tmax | °C | 621 | 813 |
| Conv. CH₄ | % | **48.7** | 74.7 |
| Sel. CO | % | 45.0 | 91.1 |
| Yield. H₂ | % | 70.6 | 85.0 |
| Sel. CO₂ | % | 55.0 | 15.0 |

The same behavior appears on other refractory and ionic conductor support. Table 8 records the results obtained under CPO conditions on Rh(1wt%) / Ce_{0.75}Zr_{0.25}O₂ composition.

**Table 7: Results of the CPO tests on 0.1 wt.% Rh/CeO₂ (after reduction for 3 h at 500°C).**

| CH₄/O₂/He | v/v/v | 2/1/20 Initial test | 2/1/20 | 2/1/4 | 2/1/1 | 4/2/2 | 2/1/20 Final test |
|---|---|---|---|---|---|---|---|
| T oven | °C | 500 | 750 | 750 | 750 | 750 | 500 |
| CT | ms | 63 | 63 | 62 | 102 | 52 | 63 |
| Tout | °C | 592 | 792 | 807 | 778 | 827 | 579 |
| Tmax | °C | 644 | 844 | 903 | 876 | 971 | 627 |
| Conv.CH₄ | % | **28.4** | 34.2 | 71.0 | 68.6 | 75.3 | **39.4** |
| Sel. CO | % | 7.9 | 35.4 | 88.7 | 89.1 | 94.1 | 33.7 |
| Yield. H₂ | % | 16.3 | 35.0 | 86.1 | 86.4 | 88.0 | 54.8 |
| Sel. CO₂ | % | **92.1** | 64.6 | 11.3 | 10.9 | 5.9 | **66.3** |

**Table 8: Results of the CPO tests on 1 wt % Rh /Ce_{0.75}Zr_{0.25}O₂ (after reduction for 3 h at 500°C).**

| CH₄/O₂/He | v/v | 2/1/20 Initial test | 2/1/20 | 2/1/4 | 2/1/1 | 4/2/2 | 2/1/20 Final test |
|---|---|---|---|---|---|---|---|
| T oven | °C | 500 | 750 | 750 | 750 | 750 | 500 |
| CT | ms | 63 | 63 | 62 | 102 | 52 | 63 |
| Tout | °C | 560 | 746 | 767 | 764 | 806 | 553 |
| Tmax | °C | 662 | 798 | 867 | 856 | 914 | 604 |
| Conv. CH₄ | % | **46.3** | 90.1 | 87.8 | 85.3 | 89.8 | **57.4** |
| Sel. CO | % | 43.1 | 96.5 | 98.0 | 96.9 | 98.8 | 60.7 |
| Yield. H₂ | % | 69.7 | 83.9 | 86.6 | 88.8 | 87.4 | 79.7 |
| Sel. CO₂ | % | **56.9** | 3.5 | 2.0 | 3.1 | 1.2 | **39.3** |

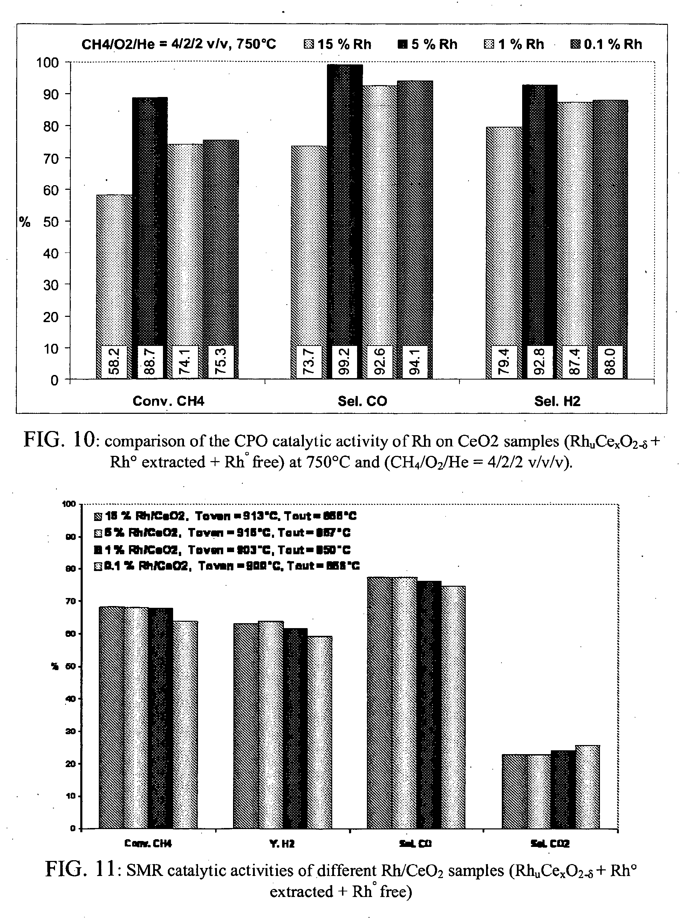

A comparison of the CPO catalytic activity between pre-reduced samples exhibiting different Rh loadings (from 0,1 to 15wt% on CeO2 = RhᵤCeₓO₂₋ + Rh° extracted + Rh° free) is given in Figure 10. The best CPO catalytic activity is obtained with 5wt.% Rh, but samples with lower Rh amounts (0.1 & 1 wt.%) exhibit also a strong activity although the quantity of Rh is decreased of more than one order of magnitude. This supports the high effectiveness of smallest and numerous extracted Rh clusters. Highest Rh amount exhibits also a high level of catalytic activity (15wt%).

### 3. Steam methane reforming results (SMR) with the inventive catalytic composition

The samples from 0.1 wt% to 15wt.% Rh/CeO₂ were tested under SMR reaction conditions for 40 hours spread over 5 days of experimental work.

Figure 11 records the activity of the four catalysts. It shows that the SMR activity (conversion, selectivity) of all samples is very similar, although the 0.1 wt.% Rh one shows slightly lower performances.

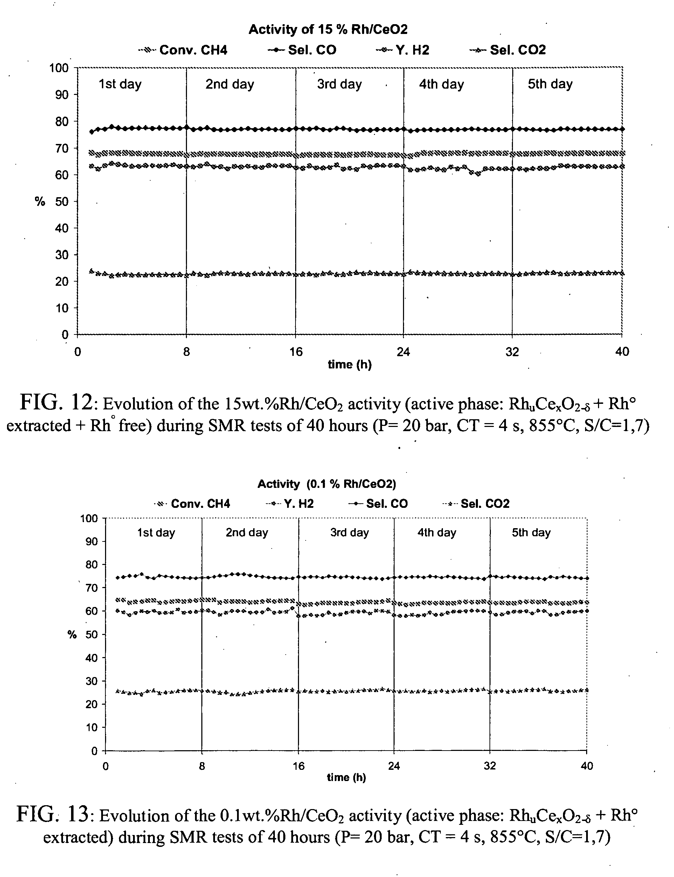

Figure 12 shows the stability after 40 hr of RhᵤCeₓO_{2-δ} + Rh₂O₃ free (initially Rh15wt%)

Figure 13 shows the stability after 40 hr of RhᵤCeₓO_{2-δ} (initially Rh 0.1wt%)

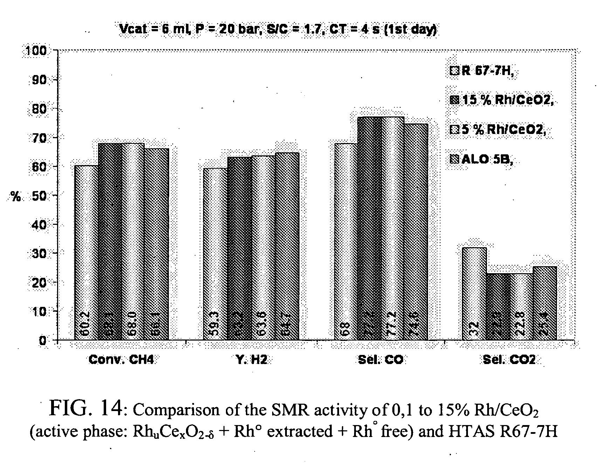

The activity of our Rh/Ceria catalyst was then compared to a commercial catalyst Ni/MgAl₂O₄ (ref HTas R67-7H). The comparison presented on Figure 14 points out a better efficiency for SMR of the catalyst claimed in this document.

## Claims

1. Process for the preparation of a catalytic composition comprising a catalytically active metal and a solid support, **characterized in that** a proportion of said catalytically active metal is dispersed on the outer surface of said support and another proportion is included into the core structure of said solid support, and said solid support is a refractory and ionic conductive oxide, comprising the following successive steps:
Step 1: Mixing a precursor of the catalytically active metal with a powder of the refractory and ionic conductive oxide in a proportion to reach a final amount of said catalytically active metal greater than its solubility limit in said refractory and ionic conductive oxide, in a solvent containing a dispersing agent, to form a suspension;
Step 2: Drying the suspension obtained at Step 1, to form a powdered mixture;
Step 3: Heating the powdered mixture obtained at Step 2, to decompose the precursor of the catalytically active metal, to obtain the catalytic composition; **characterized in that** the process comprises, prior to Step 1, the preparation of said powder of the refractory and ionic conductive oxide, said preparation comprising the subsequent following steps:
Step P₁: Preparation of an aqueous solution of salt(s) precursor(s) of said refractory and ionic conductive oxide;
Step P₇: Partial evaporation by heating and agitation of the water of the solution obtained at step P₁, to form a gel of the metal salt(s) precursor(s) of the refractory and ionic conductive oxide;
Step P₃: Heat drying of the gel obtained at Step P₂,
Step P₄: Grinding of the dry gel obtained at Step P₃, to form a powder of the gel of the metal salt(s) precursor(s) of the refractory and ionic conductive oxide.
Step P₅: Heating the powder obtained at step P₄ to decompose the precursors and to obtain said powder of the refractory and ionic conductive oxide, which is used at Step 1.

2. Process according to claim 1, which comprises a subsequent Step 4 of ageing the catalytic composition obtained at Step 3.

3. Process according to claim 1 or to claim 2, **characterized in that** the catalytically active metal is selected from Ruthenium (Ru), Rhodium (Rh), Palladium (Pd), Rhenium (Re), Osmium (Os), Iridium (Ir) Platinum (Pt) or combinations thereof

4. Process according to one of claims 1 to 3, **characterized in that** the refractory and ionic conductive oxide is selected from Ceria (CeO₂), Zirconia (ZrO₂), mixed oxides of the formula (I):
Ce₍₁₋ₓ₎ Zrₓ O_{(2-δ)} (I),
wherein 0 < x < 1 and δ ensures the electrical neutrality of the oxide, or doped mixed oxides of the formula (II):
Ce_{(1-x-y)} Zrₓ D_{y} O_{2-δ} (II),
wherein D is selected from Magnesium (Mg), Yttrium (Y), Strontium (Sr), Lanthanum (La), Presidium (Pr), Samarium (Sm), Gadolinium (Gd), Erbium (Er) or Ytterbium (Yb); wherein 0 < x < 1, 0< y <0;5 and δ ensures the electrical neutrality of the oxide.

5. Process according to claim 4, **characterized in that** the catalytically active metal is Rhodium (Rh), and the refractory and ionic conductive oxide is selected from Ceria (CeO₂) or from the mixed oxide of the formula (I):
Ce_{(1-x')} Zr_{x'} O_{(2-δ)} (I'),
wherein 0 < x' ≤ 0.5 and δ ensures the electrical neutrality of the oxide,

## Patentansprüche

1. Verfahren zur Herstellung einer katalytischen Zusammensetzung, die ein katalytisch aktives Metall und einen festen Träger umfasst, **dadurch gekennzeichnet, dass** ein Teil des katalytisch aktiven Metalls auf der äußeren Oberfläche dieses Trägers verteilt ist und ein weiterer Teil in der Kernstruktur dieses Trägers enthalten ist, und dass dieser feste Träger ein hitzebeständiges und ionenleitfähiges Oxid ist, umfassend die folgenden, aufeinander folgenden Schritte:
Schritt 1: Mischen einer Vorstufe des katalytisch aktiven Metalls mit einem Pulver des hitzebeständigen und ionenleitfähigen Oxids in einem ein Dispersionsmittel enthaltenden Lösungsmittel in einem Anteil, um eine Endmenge des katalytisch aktiven Metalls zu erreichen, die größer ist als deren Löslichkeitsgrenze in diesem hitzebeständigen und ionenleitfähigen Oxid, um eine Suspension zu bilden;
Schritt 2: Trocknen der in Schritt 1 erhaltenen Suspension, um eine pulverförmige Mischung zu bilden;
Schritt 3: Erhitzen der in Schritt 2 erhaltenen pulverförmigen Mischung, um die Vorstufe des katalytisch aktiven Metalls zu zersetzen, um die katalytische Zusammensetzung zu erhalten, **dadurch gekennzeichnet, dass** das Verfahren vor Schritt 1 die Herstellung des Pulvers eines hitzebeständigen und ionenleitfähigen Oxids umfasst, wobei diese Herstellung die folgenden, aufeinander folgenden Schritte umfasst:
Schritt P₁: Herstellung einer wässrigen Lösung aus (einer) Salzvorstufe(n) des hitzebeständigen und ionenleitfähigen Oxids;
Schritt P₂: Teilweises Verdampfen durch Erhitzen und Rühren von Wasser der in Schritt P₁ erhaltenen Lösung, um ein Gel der Metallsalzvorstufe(n) des hitzebeständigen und ionenleitfähigen Oxids zu bilden;
Schritt P₃: Trocknen durch Erhitzen des in Schritt P₂ erhaltenen Gels,
Schritt P₄: Mahlen des in Schritt *P₃ erhaltenen trockenen Gels, um ein Pulver des Gels des/der Metallsalzvorstufe(n) des hitzebeständigen und ionenleitfähigen Oxids zu bilden,
Schritt P₅: Erhitzen des in Schritt P₄ erhaltenen Pulvers, um die Vorstufen zu zersetzen und um das Pulver eines hitzebeständigen und ionenleitfähigen Oxids zu erhalten, das in Schritt 1 eingesetzt wird.

2. Verfahren nach Anspruch 1, das einen anschließenden Schritt 4 der Alterung der in Schritt 3 erhaltenen katalytischen Zusammensetzung umfasst.

3. Verfahren nach Anspruch 1 oder Anspruch 2, **dadurch gekennzeichnet, dass** das katalytisch aktive Metall aus Ruthenium (Ru), Rhodium (Rh), Palladium (Pd), Rhenium (Re), Osmium (Os), Iridium (Ir) Platin (Pt) oder Kombinationen davon ausgewählt wird.

4. Verfahren nach einem der Ansprüche 1 bis 3, **dadurch gekennzeichnet, dass** das hitzebeständige und ionenleitfähige Oxid aus Ceroxid (CeO₂), Zirkonoxid (ZrO₂), gemischten Oxiden der Formel (I):
Ce₍₁₋ₓ₎ZrₓO_{(2-δ)} (I),
wobei 0 < x < 1 ist und δ die elektrische Neutralität des Oxids gewährleistet, oder aus dotierten gemischten Oxiden der Formel (II):
Ce_{(1-x-y)}ZrₓD_{y}O_{(2-δ}) (II)
ausgewählt wird, wobei D aus Magnesium (Mg), Yttrium (Y), Strontium (Sr), Lanthan (La), Präsidium (Pr), Samarium (Sm), Gadolinium (Gd), Erbium (Er) oder Ytterbium (Yb) ausgewählt wird; wobei 0 < x < 1 ist, 0 < y < 0,5 ist und δ die elektrische Neutralität des Oxids gewährleistet.

5. Verfahren nach Anspruch 4, **dadurch gekennzeichnet, dass** das katalytisch aktive Metall Rhodium (Rh) ist und dass das hitzebeständige und ionenleitfähige Oxid aus Ceroxid (CeO₂) oder aus den gemischten Oxiden der Formel (I):
Ce_{(1-x')}Zr_{x'}O_{(2-δ)} (I),
ausgewählt wird, wobei 0 < x' < 0,5 ist und δ die elektrische Neutralität des Oxids gewährleistet.

## Revendications

1. Procédé pour la préparation d'une composition catalytique comprenant un métal catalytiquement actif et un support solide, **caractérisé en ce qu'**une proportion dudit métal catalytiquement actif est dispersée sur la surface externe dudit support et qu'une autre proportion est comprise dans la structure de noyau dudit support solide, et ledit support solide est un oxyde réfractaire et conducteur ionique, comprenant les étapes successives suivantes consistant à :
Etape 1 : mélanger un précurseur du métal catalytiquement actif à une poudre de l'oxyde réfractaire et conducteur ionique selon une proportion permettant d'atteindre une quantité finale dudit métal catalytiquement actif supérieure à sa limite de solubilité dans ledit oxyde réfractaire et conducteur ionique, dans un solvant contenant un agent de dispersion pour former une suspension ;
Etape 2 : sécher la suspension obtenue à l'étape 1, pour former un mélange pulvérulent ;
Etape 3 : chauffer le mélange pulvérulent obtenu à l'étape 2, pour décomposer le précurseur du métal catalytiquement actif, afin d'obtenir la composition catalytique ;
**caractérisé en ce que** le procédé comprend, avant l'étape 1, la préparation de ladite poudre de l'oxyde réfractaire et conducteur ionique, ladite préparation comprenant les étapes successives suivantes :
Etape P₁ : la préparation d'une solution aqueuse d'un ou plusieurs précurseurs de sels dudit oxyde réfractaire et conducteur ionique ;
Etape P₂ : l'évaporation partielle en chauffant et en agitant l'eau de la solution obtenue à l'étape P₁ pour former un gel du ou des précurseurs de sels métalliques de l'oxyde réfractaire et conducteur ionique ;
Etape P₃ : le séchage thermique du gel obtenu à l'étape P₂,
Etape P₄ : le broyage du gel sec obtenu à l'étape P₃, pour former une poudre du gel du ou des précurseurs de sels métalliques de l'oxyde réfractaire et conducteur ionique,
Etape P₅ : le chauffage de la poudre obtenue à l'étape P₄ pour décomposer les précurseurs et obtenir ladite poudre de l'oxyde réfractaire et conducteur ionique, qui est utilisé à l'étape 1.

2. Procédé selon la revendication 1, qui comprend une étape 4 suivante de vieillissement de la composition catalytique obtenue à l'étape 3.

3. Procédé selon la revendication 1 ou la revendication 2, **caractérisé en ce que** le métal catalytiquement actif est sélectionné parmi le ruthénium (Ru), le rhodium (Rh), le palladium (Pd), le rhénium (Re), l'osmium (Os), l'iridium (Ir), le platine (Pt) ou des combinaisons de ceux-ci.

4. Procédé selon l'une quelconque des revendications 1 à 3, **caractérisé en ce que** l'oxyde réfractaire et conducteur ionique est sélectionné parmi l'oxyde de cérium (CeO₂), l'oxyde de zirconium (ZrO₂), des oxydes mixtes de formule (I) suivante :
Ce₍₁₋ₓ₎ Zrₓ O_{(2-δ)} (I),
dans laquelle on a 0 < x < 1 et δ assure la neutralité électrique de l'oxyde,
ou des oxydes mixtes dopés de formule (II) suivante :
Ce_{(1-x-y)} Zrₓ D_{y} O_{2-δ} (II),
dans laquelle D est sélectionné parmi le magnésium (Mg), l'yttrium (Y), le strontium (Sr), le lanthane (La), le praséodyme (Pr), le samarium (Sm), le gadolinium (Gd), l'erbium (Er) ou l'ytterbium (Yb) ; dans laquelle on a 0 < x < 1, 0 < y < 0,5 et δ assure la neutralité électrique de l'oxyde.

5. Procédé selon la revendication 4, **caractérisé en ce que** le métal catalytiquement actif est le rhodium (Rh) et l'oxyde réfractaire et conducteur ionique est sélectionné parmi l'oxyde de cérium (CeO₂) ou l'oxyde mixte de formule (I) suivante :
Ce_{(1-x')} Zr_{x'} O_{(2-δ)} (I'),
dans laquelle on a 0 < x' ≤ 0,5 et δ assure la neutralité électrique de l'oxyde.
